# NOUVEAU FASCICULE DE BREVET EUROPEEN

(11) **EP 1 299 609 B2**
(45) Date de publication et mention de la décision concernant l'opposition: **27.09.2023**
(45) Mention de la délivrance du brevet: 08.11.2017
(21) Numéro de dépôt: 01947603.5
(22) Date de dépôt: 22.06.2001
(51) Int. Cl.: E05B 83/16, E05B 79/02, E05B 81/76, E05B 81/54

(54) **ENSEMBLE DE COMMANDE DE SERRURE POUR UN OUVRANT DE VEHICULE AUTOMOBILE ET OUVRANT MUNI DE CET ENSEMBLE**
SCHLOSSBETÄTIGUNGSSYSTEM FÜR EINEN FAHRZEUGFLÜGEL UND FLÜGEL MIT EINEM SOLCHEN SYSTEM
LOCK CONTROL ASSEMBLY FOR A MOTOR VEHICLE OPENING PANEL AND OPENING PANEL EQUIPPED WITH SAME

(30) Priorité: 29.06.2000 FR 0008427
(43) Date de publication de la demande: 09.04.2003
(73) Titulaire: U-Shin France, 94000 Créteil (FR)
(72) Inventeur: LESUEUR, Guillaume, F-58000 Nevers (FR); SIMONEAU, David, F-03320 Lurcy-Levis (FR)
(74) Mandataire: Prinz & Partner mbB
(86) Numéro de dépôt international: PCT/FR2001/001995
(87) Numéro de publication internationale: WO 2002/001028

(56) Documents cités:
- EP-A- 0 506 514
- EP-A- 0 881 111
- EP-A- 0 999 323
- EP-A1- 0 976 617
- EP-A2- 0 903 453
- EP-A2- 0 999 324
- EP-A2- 0 999 325
- EP-A2- 1 087 080
- WO-A-98/42527
- DE-A1- 19 914 119
- FR-A1- 2 772 818
- FR-A1- 2 783 775
- JP-A- H09 136 544
- JP-A- H10 250 478
- US-A- 5 174 619
- US-A- 6 131 989
- US-B1- 6 174 016
- US-B1- 6 256 932

## Description

La présente invention concerne un ensemble de commande de serrure pour un ouvrant de véhicule automobile et un ouvrant muni de cet ensemble.

Elle s'applique en particulier à la commande d'une serrure de coffre ou de hayon de véhicule automobile.

On connaît déjà dans l'état de la technique un ensemble de commande de serrure pour un ouvrant de véhicule automobile, du type comprenant un support principal destiné à venir en appui sur une paroi de l'ouvrant délimitant une surface externe de cet ouvrant, et des moyens électriques de commande de la serrure destinés à être reliés à un circuit électrique de commande porté par l'ouvrant par des moyens de connexion électrique.

Le circuit électrique de commande est généralement destiné à piloter au moins un actionneur électrique de commande de la serrure par l'intermédiaire, éventuellement, d'une unité centrale électronique.

Le cas échéant, l'ensemble de commande peut porter, en plus des moyens électriques de commande, des moyens mécaniques de commande de la serrure.

Habituellement, l'ensemble de commande de serrure comporte un support secondaire portant les moyens électriques de commande et les moyens de connexion électrique. Ce support secondaire est destiné à venir en appui sur la surface interne de la paroi de l'ouvrant. De ce fait, l'ouvrant étant dans sa position normale de fermeture, le support principal est visible et accessible de l'extérieur du véhicule alors que le support secondaire ne l'est pas. Le support principal participe à l'esthétique du véhicule.

Pour monter un ensemble de commande de serrure sur l'ouvrant, il convient, tout d'abord, de monter le support principal en appui sur la surface externe de la paroi de l'ouvrant, puis, de monter le support secondaire sur la surface interne de la paroi de l'ouvrant, de façon à enserrer la paroi de l'ouvrant entre les supports principal et secondaire.

A ces opérations de montage, s'ajoutent éventuellement des opérations de montage de moyens d'éclairage sur le support principal et de connexion des moyens électriques de commande de la serrure et des moyens d'éclairage à des circuits électriques d'alimentation et/ou de commande correspondants. Les moyens d'éclairage sont destinés, par exemple, à éclairer une plaque minéralogique fixée sur l'ouvrant.

Des ensembles de commande de serrure pour un ouvrant de véhicule automobile sont connus des documents EP 999 324 A2 et EP 881 111 A1.

L'invention a pour but de simplifier le montage et la structure d'un ensemble de commande de serrure du type précité.

A cet effet, l'invention a pour objet un ensemble de commande de serrure pour un ouvrant de véhicule selon la revendication 1. Suivant d'autres caractéristiques de cet ensemble :
- le support principal porte des moyens d'éclairage d'une zone environnante, telle qu'une zone de fixation d'une plaque minéralogique du véhicule ;
- les moyens de fixation comprennent des agrafes de pré-fixation et des vis de fixation définitive destinées à coopérer avec des moyens complémentaires de pré-fixation et de fixation définitive ménagés su l'ouvrant ;
- le support principal porte des moyens de pré-positionnement de l'ensemble de commande par rapport à l'ouvrant, destinés à coopérer avec des moyens de pré-positionnement complémentaires ménagés sur l'ouvrant ;
- le support principal a une forme générale de boîtier comprenant une face, au moins partiellement ouverte, destinée à venir en appui sur la surface externe de l'ouvrant.

L'invention a également pour objet un ouvrant pour véhicule automobile, caractérisé en ce qu'il comprend un ensemble de commande de serrure tel que défini ci-dessus.

Suivant d'autres caractéristiques de cet ouvrant:
- des moyens d'étanchéité sont interposés entre le support principal et la surface externe de l'ouvrant ;
- les moyens d'étanchéité comprennent au moins un organe d'étanchéité traversé par le connecteur de commande électrique ;
- les moyens d'étanchéité comprennent au moins un organe d'étanchéité entourant des orifices en vis-à-vis ménagés dans le support principal et dans l'ouvrant pour accéder à une lampe des moyens d'éclairage logée dans le support principal.

L'invention sera mieux comprise à la lecture de la description qui va suivre, donnée uniquement à titre d'exemple et faite en se référant aux dessins dans lesquels :
- la figure 1 est une vue d'un véhicule muni d'un ouvrant selon l'invention ;
- la figure 2 est une vue en perspective éclatée d'un ensemble de commande de serrure selon l'invention équipant l'ouvrant du véhicule représenté sur la figure 1 ;
- la figure 3 est une vue de face de l'ensemble de commande de serrure représenté sur la figure 2, suivant la flèche 3 de la figure 2 ;
- la figure 4 est une vue de détail en perspective du support secondaire portant les moyens de commandes électriques et les moyens de connexions électriques ;
- la figure 5 est une vue de détail en perspective avec une coupe suivant la ligne 5-5 de la figure 3 ;
- les figures 6 et 7 sont des vues en coupe suivant les lignes 6-6 et 7-7 respectivement de la figure 3.

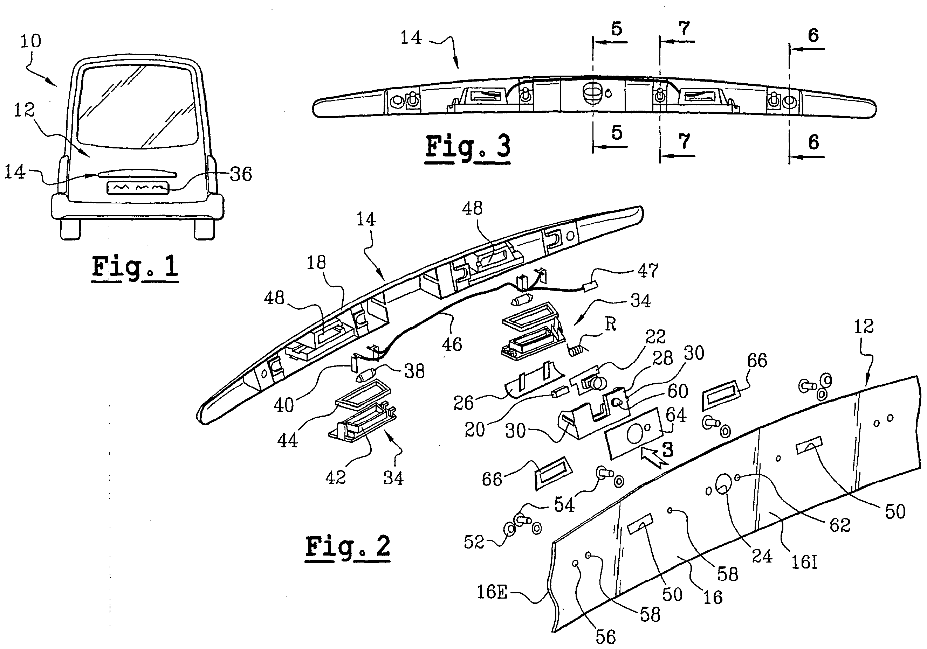

On a représenté sur la figure 1 un véhicule automobile 10 muni d'un ouvrant formant un hayon arrière 12. Ce hayon 12 comporte un ensemble de commande de serrure selon l'invention, désigné par la référence 14 et illustré plus en détail sur les figures 2 et 3. La serrure, de type classique, n'est pas représentée sur les figures.

Le hayon 12 est délimité par une paroi 16 dont une portion est représentée notamment sur la figure 2. La paroi 16 est délimitée par une surface interne 16I et une surface externe 16E. Cette dernière surface 16E est visible de l'extérieur du véhicule lorsque le hayon 12 est dans sa position normale de fermeture.

L'ensemble 14 comporte un support principal 18 destiné à venir en appui sur la surface externe 16E de la paroi du hayon.

Le support principal 18 a une forme générale de boîtier allongé par exemple suivant la direction horizontale en considérant la figure 1.

Le support principal 18 comporte une face, au moins partiellement ouverte, destinée à venir en appui sur la surface externe 16E de la paroi du hayon.

L'ensemble 14 comprend des moyens électriques de commande de la serrure destinés à être reliés à un circuit électrique classique de commande, porté par l'ouvrant, par des moyens de connexion électrique.

Dans l'exemple illustré, les moyens électriques de commande comprennent un interrupteur 20 de type classique et les moyens de connexion électrique comprennent un connecteur électrique de commande 22 de type classique destiné à s'étendre à travers un orifice 24 ménagé dans la paroi 16 de l'ouvrant (voir figures 2, 3 et 5).

L'interrupteur 20, raccordé électriquement au connecteur 22 par des moyens classiques, est actionné par un levier de commande 26, en forme générale de palette, articulé sur un support secondaire 28 porté par le support principal 18.

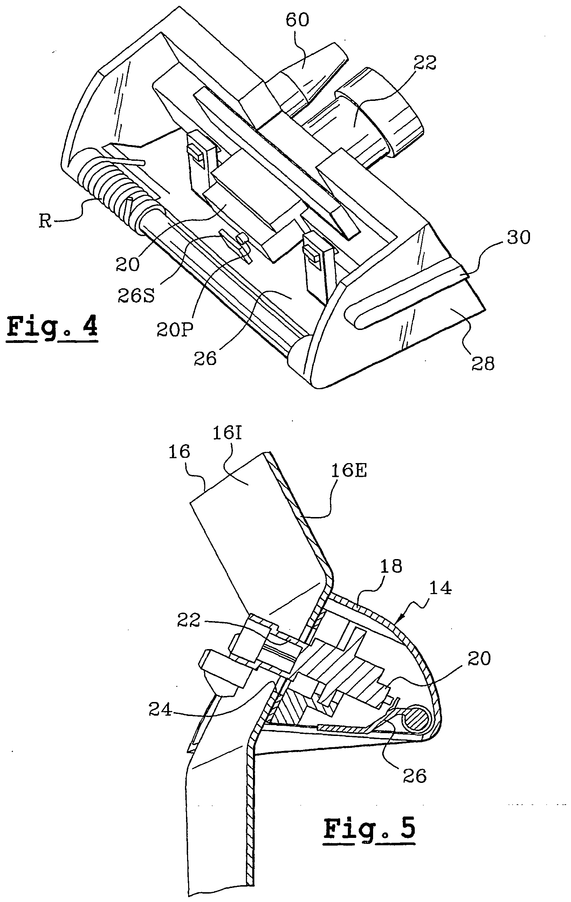

Le support secondaire 28 porte l'interrupteur 20 et le connecteur de commande 22, comme cela est représenté plus clairement sur les figures 4 et 5. Sur ces figures, on notera que l'interrupteur 20 est muni d'un poussoir 20P destiné à coopérer avec une saillie 26S du levier pour l'ouverture et la fermeture de l'interrupteur 20.

L'interrupteur 20 permet par exemple de piloter un dispositif de commande de la serrure du type « mains libres ». De façon classique, ce type de dispositif de commande comporte une unité centrale électronique destinée à identifier l'utilisateur qui sollicite le déverrouillage ou verrouillage de la serrure, ceci au moyen d'un badge de reconnaissance magnétique porté par l'utilisateur et détecté par l'unité centrale électronique. Ainsi, lorsque le levier 26 est actionné, l'interrupteur 20 change d'état de façon à déclencher le processus d'identification par l'unité centrale électronique et, s'il y a lieu, le déverrouillage ou verrouillage de la serrure permettant l'ouverture de l'ouvrant.

Le support secondaire 28 est fixé sur le support principal 14 à l'aide de moyens d'emboîtement comprenant par exemple des rails 30, ménagés sur le support secondaire 28, coopérant avec des rainures complémentaires 32 ménagées dans le support principal 18.

Le levier de commande 26 est rappelé élastiquement vers une position de repos par un ressort R à effet angulaire représenté notamment sur les figures 2 et 4.

Le support principal 18 porte des doubles moyens 34 d'éclairage d'une zone environnante de la paroi 16 du hayon. Cette zone environnante est par exemple la zone de la surface extérieure 16E de la paroi sur laquelle est fixée une plaque minéralogique 36 (voir figure 1).

De préférence, les moyens d'éclairage 34 comprennent une lampe 38 en contact électrique avec deux cosses métalliques 40. La lampe 38 et les cosses 40 sont logées dans le support principal 18. La lumière de la lampe 38 est diffusée à travers une paroi dioptrique 42 portée par le support principal 18. De préférence, un joint d'étanchéité 44 est interposé entre le support principal 18 et la paroi dioptrique 42. Les cosses 40 sont raccordées à des moyens d'alimentation électrique à l'aide de moyens classiques comprenant des câbles 46 et un connecteur d'alimentation électrique 47.

En variante, les connecteurs de commande 22 et d'alimentation électrique 47 pourraient être réunis en un connecteur unique.

Des orifices 48, 50 sont ménagés en vis-à-vis dans le support principal 18 et dans la paroi 16 du hayon afin de permettre l'accès à la lampe 38 notamment pour son remplacement.

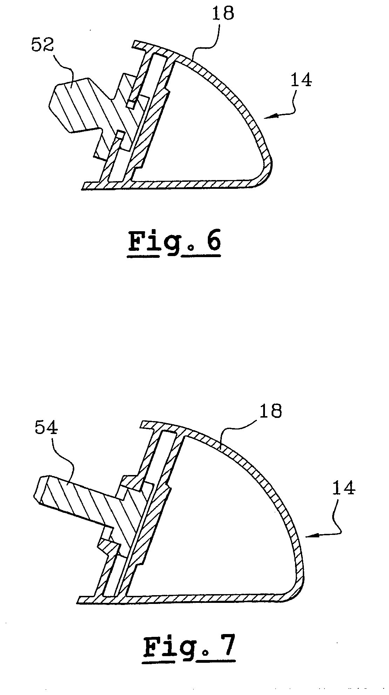

Le support principal 18 porte des moyens de fixation de l'ensemble de commande 14 sur la paroi 16 du hayon. Ces moyens de fixation comprennent, par exemple, des agrafes 52 de pré-fixation (voir figure 6) et des vis 54 de fixation définitive (voir figure 7) destinées à coopérer avec des orifices de pré-fixation complémentaires 56 et des orifices de fixation définitive complémentaires 58 ménagés dans la paroi 16.

Le support principal 18 porte des moyens de pré-positionnement de l'ensemble de commande 14 par rapport au hayon 12. Ces moyens de pré-positionnement comprennent, par exemple, un pion 60, fixé sur le support secondaire 28, destiné à coopérer avec un orifice de pré-positionnement complémentaire 62 ménagé dans la paroi 16 du hayon.

Des moyens d'étanchéité sont interposés entre le support principal 18 et la surface externe 16E de la paroi du hayon.

De préférence, ces moyens d'étanchéité comprennent au moins un organe d'étanchéité 64 traversé par le connecteur de commande 22 et par le pion de pré-positionnement 60. Cet organe d'étanchéité 64 est interposé entre le support secondaire 28 et la paroi 16 afin d'assurer l'étanchéité du connecteur de commande 22.

De préférence également les moyens d'étanchéité comprennent de plus au moins un organe d'étanchéité 66 interposé entre le support principal 18 et la paroi 16 de façon à entourer les orifices 48, 50 permettant l'accès à la lampe 38.

Les organes d'étanchéité 64, 66 sont découpés par exemple dans des feuilles d'étanchéité autocollantes.

Le montage de l'ensemble 14 sur le hayon 12 est très simple à réaliser. Tout d'abord on accoste l'ensemble 14 sur la paroi 16 en s'aidant du pion 60 de pré-positionnement, puis on réalise une pré-fixation de l'ensemble 14 sur la paroi 16 au moyen des agrafes 52. Ensuite, on fixe définitivement l'ensemble 14 sur le hayon au moyen d'écrous vissés sur les vis 54. Enfin, on raccorde les connecteurs de commande 22 et d'alimentation électrique 47 aux circuits électriques correspondants.

Parmi les avantages de l'invention, on notera que celle-ci permet de réunir dans l'ensemble 14 des moyens ayant des fonctions variées, tels que des moyens électriques de commande, des moyens de connexion électrique et des moyens d'éclairage.

Ainsi, l'ensemble de commande de serrure 14 forme un module dont les différents éléments peuvent être assemblés entre eux préalablement au montage de cet ensemble 14 sur le hayon 12.

## Revendications

1. Ensemble de commande de serrure pour un ouvrant (12) de véhicule automobile, du type comprenant un support principal (18) destiné à venir en appui sur la face externe d'une paroi (16) de l'ouvrant délimitant une surface externe (16E) de cet ouvrant, et des moyens électriques (20) de commande de la serrure destinés à être reliés à un circuit électrique de commande porté par l'ouvrant (12) par des moyens de connexion électrique (22), tel que les moyens électriques de commande (20) et les moyens de connexion électrique (22) sont portés par le support principal (18) et en ce que le support principal (18) porte des moyens (52,54) de fixation de l'ensemble de commande sur l'ouvrant (12), **caractérisé en ce que** les moyens électriques de commande comprennent un interrupteur (20) actionné par un levier (26) de commande porté par le support principal (18), **en ce que** les moyens de connexion électrique comprennent un connecteur électrique de commande (22) destiné à s'étendre à travers un orifice (24) ménagé dans l'ouvrant (12), et **en ce que** le levier de commande (26) est articulé sur un support secondaire (28) porté par le support principal (18), ce support secondaire (28) portant l'interrupteur (20) et le connecteur de commande (22).

2. Ensemble selon la revendication 1, **caractérisé en ce que** le support principal (18) porte des moyens (34) d'éclairage d'une zone environnante, telle qu'une zone de fixation d'une plaque minéralogique (36) du véhicule.

3. Ensemble selon l'une des revendications précédentes, **caractérisé en ce que** les moyens de fixation comprennent des agrafes (52) de pré-fixation et des vis (54) de fixation définitive destinées à coopérer avec des moyens complémentaires de pré-fixation (56) et de fixation définitive (58) ménagés sur l'ouvrant (12).

4. Ensemble selon l'une quelconque des revendications précédentes, **caractérisé en ce que** le support principal (18) porte des moyens (60) de prépositionnement de l'ensemble de commande par rapport à l'ouvrant (12), destinés à coopérer avec des moyens de pré-positionnement complémentaires (62) ménagés sur l'ouvrant (12).

5. Ensemble selon l'une quelconque des revendications précédentes, **caractérisé en ce que** le support principal (18) a une forme générale de boîtier comprenant une face, au moins partiellement ouverte, destinée à venir en appui sur la surface externe (16E) de l'ouvrant (12).

6. Ouvrant de véhicule automobile, **caractérisé en ce qu'**il comprend un ensemble de commande de serrure selon l'une quelconque des revendications précédentes.

7. Ouvrant selon la revendication 6, **caractérisé en ce que** des moyens d'étanchéité (64,66) sont interposés entre le support principal (18) et la surface externe (16E) de l'ouvrant.

8. Ouvrant selon la revendication 7, **caractérisé en ce que** les moyens d'étanchéité comprennent au moins un organe d'étanchéité (64) traversé par le connecteur de commande électrique (22).

9. Ouvrant selon la revendication 7 prise en combinaison avec la revendication 2, **caractérisé en ce que** les moyens d'étanchéité comprennent au moins un organe d'étanchéité (64) entourant des orifices (48,50) en vis-à-vis ménagés dans le support principal (18) et dans l'ouvrant (12) pour accéder à une lampe (38) des moyens d'éclairage logée dans le support principal (18).

## Patentansprüche

1. Schlosssteuereinheit für eine Kraftfahrzeugtür (12) des Typs, der einen Hauptträger (18) umfasst, der dazu bestimmt ist, auf der Außenseite einer Wand (16) der Tür, die eine äußere Oberfläche (16E) dieser Tür abgrenzt, zum Aufliegen zu kommen, und elektrische Steuermittel (20) des Schlosses, die dazu bestimmt sind, mit einer elektrischen Steuerschaltung, die von der Tür (12) getragen wird, durch elektrische Verbindungsmittel (22) verbunden zu werden, so dass die elektrischen Steuermittel (20) und die elektrischen Verbindungsmittel (22) von dem Hauptträger (18) getragen werden, und dass der Hauptträger (18) Mittel (52, 54) zum Befestigen der Steuereinheit auf der Tür (12) trägt, **dadurch gekennzeichnet, dass** die elektrischen Steuermittel einen Schalter (20) umfassen, der von einem Steuerhebel (26), der von dem Hauptträger (18) getragen wird, betätigt wird, dass die elektrischen Verbindungsmittel einen elektrischen Steuersteckverbinder (22) umfassen, der dazu bestimmt ist, sich durch eine Öffnung (24), die in der Tür (12) eingerichtet ist, zu erstrecken, und dass der Steuerhebel (26) auf einem Sekundärträger (28), der von dem Hauptträger (18) getragen wird, angelenkt ist, wobei dieser Sekundärträger (28) den Schalter (20) und den Steuersteckverbinder (22) trägt.

2. Einheit nach Anspruch 1, **dadurch gekennzeichnet, dass** der Hauptträger (18) Mittel (34) zum Beleuchten einer umgebenden Zone, wie eine Befestigungszone eines Typenschilds (36) des Fahrzeugs trägt.

3. Einheit nach einem der vorhergehenden Ansprüche, **dadurch gekennzeichnet, dass** die Befestigungsmittel Klammern (52) zum Vorbefestigen und Schrauben (54) zum endgültigen Befestigen umfassen, die dazu bestimmt sind, mit ergänzenden Mitteln zum Vorbefestigen (56) und endgültigen Befestigen (58), die auf der Tür (12) eingerichtet sind, zusammenzuwirken.

4. Einheit nach einem der vorhergehenden Ansprüche, **dadurch gekennzeichnet, dass** der Hauptträger (18) Mittel (60) zum Vorpositionieren der Steuereinheit in Bezug zu der Tür (12) trägt, die dazu bestimmt sind, mit ergänzenden Vorpositionierungsmitteln (62), die auf der Tür (12) eingerichtet sind, zusammenzuwirken.

5. Einheit nach einem der vorhergehenden Ansprüche, **dadurch gekennzeichnet, dass** der Hauptträger (18) eine allgemeine Gehäuseform hat, die eine Seite, die mindestens teilweise offen ist, umfasst, die dazu bestimmt ist, auf der äußeren Oberfläche (16E) der Tür (12) zum Aufliegen zu kommen.

6. Kraftfahrzeugtür, **dadurch gekennzeichnet, dass** sie eine Schlosssteuereinheit nach einem der vorhergehenden Ansprüche umfasst.

7. Tür nach Anspruch 6, **dadurch gekennzeichnet, dass** Abdichtmittel (64, 66) zwischen den Hauptträger (18) und die äußere Oberfläche (16E) der Tür eingefügt sind.

8. Tür nach Anspruch 7, **dadurch gekennzeichnet, dass** die Abdichtmittel mindestens ein Abdichtorgan (64) umfassen, das von dem elektrischen Steuersteckverbinder (22) durchquert wird.

9. Tür nach Anspruch 7, mit Anspruch 2 kombiniert genommen, **dadurch gekennzeichnet, dass** die Abdichtmittel mindestens ein Abdichtorgan (64) umfassen, das Öffnungen (48, 50) in Gegenüberlage umgibt, die in dem Hauptträger (18) und in der Tür (12) eingerichtet sind, um auf eine Lampe (38) der Beleuchtungsmittel, die in dem Hauptträger (18) untergebracht sind, zuzugreifen.

## Claims

1. A latch control assembly for a motor vehicle door leaf (12), of the type comprising a main support (18) intended to bear on the outer face of a wall (16) of the door leaf delimiting an outer surface (16E) of this door leaf, and electrical control means (20) of the latch intended to be connected to an electrical control circuit carried by the door leaf (12) by electrical connection means (22), such that the electrical control means (20) and the electrical connection means (22) are carried by the main support (18) and in that the main support (18) carries fastening means (52, 54) of the control assembly on the door leaf (12), **characterized in that** the electrical control means comprise a switch (20) actuated by a control lever (26) carried by the main support (18), **in that** the electrical connection means comprise an electrical control connector (22) intended to extend through an orifice (24) arranged in the door leaf (12), and **in that** the control lever (26) is articulated on a secondary support (28) carried by the main support (18), this secondary support (28) carrying the switch (2) and the control connector (22).

2. The assembly according to claim 1, **characterized in that** the main support (18) carries lighting means (34) of a surrounding area, such that a fastening area of a license plate (36) of the vehicle.

3. The assembly according to any of the preceding claims, **characterized in that** the fastening means comprise pre-fastening clips (52) and final fastening screws (54) intended to cooperate with complementary pre-fastening (56) and final fastening (58) means formed on the door leaf (12).

4. The assembly according to any one of the preceding claims, **characterized in that** the main support (18) carries prepositioning means (60) of the control assembly relative to the door leaf (12), intended to cooperate with complementary prepositioning means (62) arranged on the door leaf (12).

5. The assembly according to any one of the preceding claims, **characterized in that** the main support (18) has a general shape of case comprising a face, at least partially open, intended to bear on the outer surface (16E) of the door leaf (12).

6. The motor vehicle door leaf, **characterized in that** it comprises a control assembly of a latch according to any one of the preceding claims.

7. The door leaf according to claim 6, **characterized in that** sealing means (64, 66) are interposed between the main support (18) and the outer surface (16E) of the door leaf.

8. The door leaf according to claim 7, **characterized in that** the sealing means comprise at least one sealing member (64) crossed by the electrical control connector (22).

9. The door leaf according to claim 7 taken in combination with claim 2, **characterized in that** the sealing means comprise at least one sealing member (64) surrounding opposite orifices (48, 50) arranged in the main support (18) and in the door leaf (12) in order to access a lamp (38) of the lighting means housed in the main support (18).
